# EUROPÄISCHE PATENTSCHRIFT

(11) **EP 0 699 146 B1**
(45) Veröffentlichungstag und Bekanntmachung des Hinweises auf die Patenterteilung: **11.12.1996**
(21) Anmeldenummer: 94915020.5
(22) Anmeldetag: 11.05.1994
(51) Int. Cl.: B60T 8/36

(54) **SCHWINGUNGSDÄMPFENDE ANORDNUNG EINES HYDROAGGREGATES EINER SCHLUPFGEREGELTEN BREMSANLAGE**
VIBRATION-DAMPING ARRANGEMENT OF A HYDRAULIC UNIT OF A CONTROLLED-SLIP BRAKING SYSTEM
SYSTEME AMORTISSEUR DE VIBRATIONS D'UN ORGANE HYDRAULIQUE D'UN SYSTEME DE FREINAGE ANTIPATINAGE

(30) Priorität: 26.05.1993 DE 4317467
(43) Veröffentlichungstag der Anmeldung: 06.03.1996
(73) Patentinhaber: ROBERT BOSCH GMBH, 70442 Stuttgart (DE)
(72) Erfinder: HUBER, Siegfried, D-74189 Weinsberg (DE)
(86) Internationale Anmeldenummer: DE9400541
(87) Internationale Veröffentlichungsnummer: WO9427846

(56) Entgegenhaltungen:
- EP-A- 0 358 127
- DE-C- 3 941 401
- PATENT ABSTRACTS OF JAPAN vol. 15, no. 339 (M-1152) 28. August 1991 & JP,A,03 132 464 (NISSAN MOTOR CO.) 5. Juni 1991

## Beschreibung

### Stand der Technik

Die Erfindung geht aus von einem schwingungsdämpfend abgestützten Hydroaggregat nach der Gattung des Hauptanspruchs.

Es ist schon eine solche schwingungsdämpfende Abstützung eines Hydroaggregates in einem Fahrzeug bekannt (DE-C-39 41 401), bei der das Hydroaggregat-Gehäuse an voneinander abgewandten Stirnflächen mit drei horizontal verlaufenden Zapfen versehen ist, welche jeweils in ein Gummiformteil eingreifen, das in einem kappenförmigen, mit dem Aufbau des Fahrzeugs verbundenen Bauteil sitzt. Bei der Schlupfregelung werden insbesondere von der Hubkolben-Pumpe angeregte Schwingungen des Hydroaggregates nur unvollkommen gedämpft, da die Gummiformteile im wesentlichen auf Druck beansprucht sind.

### Vorteile der Erfindung

Das erfindungsgemäß schwingungsdämpfend abgestützte Hydroaggregat mit den kennzeichnenden Merkmalen des Hauptanspruchs hat demgegenüber den Vorteil, daß die Gummifederelemente beim Betrieb der Pumpe hauptsächlich auf Schub, d.h. in einer Weise beansprucht werden, in welcher die für Gummi charakteristische, gegenüber Druck- oder Zugbeanspruchung kleinere Federrate genutzt wird. Die Wirksamkeit der Körperschallisolation vom Hydroaggregat auf den Fahrzeugaufbau ist dadurch verbessert.

Durch die im Unteranspruch angegebene Weiterbildung der Erfindung werden der Montagegrad des Hydroaggregates erhöht und der Einbau in das Fahrzeug erleichtert. Außerdem ist eine Fehlmontage der Gummifederelemente vermieden.

### Zeichnung

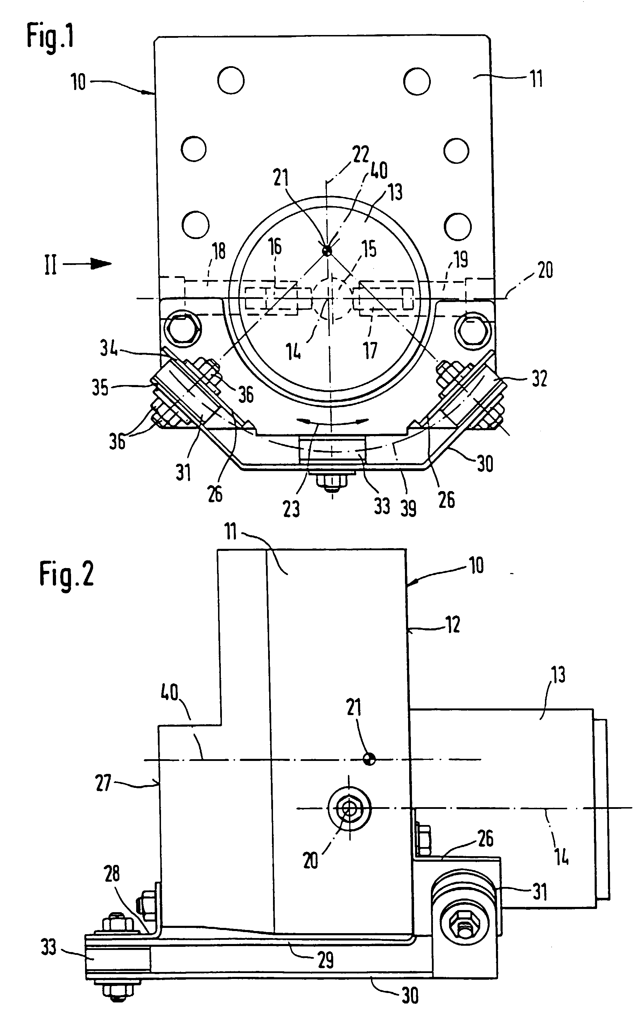

Ein Ausführungsbeispiel der Erfindung ist in der Zeichnung vereinfacht dargestellt und in der nachfolgenden Beschreibung näher erläutert. Es zeigen Figur 1 eine Stirnansicht eines Hydroaggregates mit der Anordnung von Gummifederelementen und Figur 2 eine Seitenansicht des Hydroaggregates in Richtung des Pfeils II in Figur 1 gesehen.

### Beschreibung des Ausführungsbeispiels

Das in den Figuren 1 und 2 der Zeichnung dargestellte Hydroaggregat 10 ist Bestandteil einer nicht wiedergegebenen, schlupfgeregelten Bremsanlage eines Fahrzeugs, insbesondere eines Personenkraftwagens. Das Hydroaggregat 10 hat ein Gehäuse 11 etwa in der Form eines hochkant stehenden Quaders. An eine vertikal verlaufende Stirnfläche 12 des Gehäuses 11 ist ein elektrischer Antriebsmotor 13 angefügt. Der Motor 13 dient dem rotatorischen Antrieb einer mit waagerecht verlaufender Längsachse 14 angeordneter Exzenterwelle 15. An dieser greifen zu beiden Seiten je ein Hubkolben 16 bzw. 17 einer Hubkolbenpumpe 18 bzw. 19 an. Die im Gehäuse 11 des Hydroaggregates 10 angeordneten Hubkolbenpumpen 18 und 19 kreuzen mit ihrer waagerecht verlaufenden Längsachse 20 die Längsachse 14 der Exzenterwelle 15 im rechten Winkel. Der Schwerpunkt 21 des Hydroaggregates 10 liegt mit Abstand oberhalb der Längsachse 20 innerhalb des Gehäuses 11 in einer die Wellenlängsachse 14 aufnehmenden Vertikalebene 22. Demzufolge wird das Hydroaggregat 10 von den translatorisch angetriebenen Hubkolben 16 und 17 zu Drehschwingungen um den Schwerpunkt 21 in Richtung des in der Figur 1 angegebenen Doppelpfeils 23 angeregt.

An der motorseitigen Stirnfläche 12 des Gehäuses 11 ist ein aus Blech geformter Doppelwinkel 26 befestigt. An der gegenüberliegenden Stirnfläche 27 des Gehäuses 11 ist ein Einfachwinkel 28 aus Blech angeschraubt (Figur 2). Wie gezeichnet, können der Doppelwinkel 26 und der Einfachwinkel 28 durch eine Lasche 29 miteinander verbunden sein. Außerdem ist ein als Blechformteil ausgebildeter Halter 30 mit Abstand unterhalb des Hydroaggregates 10 dargestellt. Dieser ist auf nicht dargestellte Weise zur Befestigung am Fahrzeug ausgebildet. Zwischen dem Doppelwinkel 26 und dem Halter 30 sind zwei Gummifederelemente 31 und 32, zwischen dem Einfachwinkel 28 und dem Halter 30 ist ein Gummifederelement 33 angeordnet. Die als Gummi-Metall-Feder in der Form der Scheibenfeder ausgebildeten Gummifederelemente 31 bis 33 sind an ihren Stirnseiten 34 und 35 mit Befestigungsmitteln 36 in Form von Gewindebolzen und Muttern einerseits mit dem Doppelwinkel 26 bzw. dem Einfachwinkel 28 und andererseits mit dem Halter 30 verschraubt. Die drei Gummifederelemente 31 bis 33 sind, gemäß Figur 1 in Richtung der Wellenlängsachse 14 gesehen, sowohl vor (31, 32) und hinter (33) einer vertikalen Projektion des Schwerpunktes 21 als auch symmetrisch in (33) und zu beiden Seiten (31, 32) der Vertikalebene 22 angeordnet. Wie Figur 1 der Zeichnung auch erkennen läßt, sind die drei Gummifederelemente 31 bis 33 außerdem entlang dem Mantel 39 eines gedachten Kreiszylinders angeordnet, in dessen waagerecht verlaufender, zur Wellenlängsachse 14 paralleler Längsachse 40 der Schwerpunkt 21 des Hydroaggregates 10 liegt. Dabei erstrecken sich die Stirnseiten 34 und 35 der Gummifederelemente 31 bis 33 annähernd tangential zum Mantel 39 des gedachten Kreiszylinders.

Das Hydroaggregat 10 ist somit unterhalb seines Schwerpunktes 21 stabil auf drei Gummifederelementen 31 bis 33 elastisch am Fahrzeug abgestützt. Angeregt von den motorisch angetriebenen Hubkolbenpumpen 18 und 19 vermag es Schwingungen um die Längsachse 40 des Kreiszylinders auszuführen, entlang dessen Mantel 39 die Gummifederelemente 31 bis 33 angeordnet sind. Dabei werden die Gummifederelemente 31 bis 33 auf Parallelschub beansprucht, so daß eine wirkungsvolle Dämpfung der Schwingbewegung des Hydroaggregates 10 in Richtung des Doppelpfeiles 23 aufgrund der kleinen Federrate des Werkstoffs Gummi erzielt wird. Da die Resonanzfrequenz der Gummifederelemente 31 bis 33 im Verhältnis zur Anregungsfrequenz des Hydroaggregates 10 klein ist, führt dies zu einer guten Körperschallisolation des Hydroaggregates gegenüber dem Fahrzeug.

## Patentansprüche

1. Schwingungsdämpfend abgestütztes Hydroaggregat (10) einer schlupfgeregelten Bremsanlage eines Fahrzeugs, insbesondere eines Pesonenkraftwagens, mit wenigstens einer Hubkolbenpumpe (18, 19) und den folgenden Merkmalen:
- die Längsachse (20) des von einer rotierenden, horizontal verlaufenden Exzenterwelle (15) betätigten Hubkolbens (16, 17) der Pumpe (18, 19) verläuft mit Abstand zum Schwerpunkt (21) des Hydroaggregates (10),
- das Gehäuse (11) des Hydroaggregates (10) ist mit drei Gummifederelementen (31, 32, 33) an dem Fahrzeug elastisch abgestützt,
- bezüglich einer den Schwerpunkt (21) und die Längsachse (14) der Exzenterwelle (15) aufnehmenden Vertikalebene (22) sind, in Richtung der Wellenlängsachse (14) gesehen, die Gummifederelemente (31, 32, 33) sowohl vor und hinter einer vertikalen Projektion des Schwerpunktes (21) als auch symmetrich und zu beiden Seiten der Vertikalebene (22) angeordnet,
gekennzeichnet durch die weiteren Merkmale:
- die drei Gummifederelemente (31, 32, 33) sind unterhalb des Schwerpunkts (21) des Hydroaggregates (10) angeordnet,
- die drei Gummifederelemente (31, 32, 33) sind entlang dem Mantel (39) eines gedachten Kreiszylinders angeordnet, in dessen waagerecht sowie parallel zur Längsachse (14) der Exzenterwelle (15) verlaufender Längsachse (40) der Schwerpunkt (21) des Hydroaggregates (10) liegt,
- die Gummifederelemente (31, 32, 33) sind als Scheibenfeder ausgebildet, deren Befestigungsmittel (36) tragende Stirnseiten (34, 35) sich annähernd tangential zum Mantel (39) des gedachten Kreiszylinders erstrecken.

2. Hydroaggregat nach Anspruch 1, dadurch gekennzeichnet, daß die Gummifederelemente (31, 32, 33) einerseits wenigstens mittelbar am Gehäuse (11) des Hydroaggregates (10) befestigt und andererseits mit einem als Blechformteil ausgebildeten Halter (30) verbunden sind, der zur Befestigung am Fahrzeug bestimmt ist.

## Claims

1. Hydraulic unit (10) which is supported in such a way as to damp vibration and forms part of a slip-controlled brake system of a vehicle, especially a passenger vehicle, having at least one reciprocating-piston pump (18, 19) and the following features:
- the longitudinal axis (20) of the reciprocating piston (16, 17) of the pump (18, 19), which is actuated by a rotating, horizontally extending eccentric shaft (15), runs at a distance from the centre of gravity (21) of the hydraulic unit (10),
- the housing (11) of the hydraulic unit (10) is supported elastically on the vehicle by three rubber spring elements (31, 32, 33),
- in relation to a vertical plane (22) passing through the centre of gravity (21) and the longitudinal axis (14) of the eccentric shaft (15), the rubber spring elements (31, 32, 33) are, as seen in the direction of the shaft longitudinal axis (14), arranged both in front of and behind a vertical projection of the centre of gravity (21) and symmetrically and on both sides of the vertical plane (22),
characterized by the following further features:
- the three rubber spring elements (31, 32, 33) are arranged below the centre of gravity (21) of the hydraulic unit (10),
- the three rubber spring elements (31, 32, 33) are arranged along the lateral surface (39) of an imaginary circular cylinder, on the horizontally extending longitudinal axis (40), which also runs parallel to the longitudinal axis (14) of the eccentric shaft (15), of which the centre of gravity (21) of the hydraulic unit (10) lies,
- the rubber spring elements (31, 32, 33) are designed as disc springs, the ends (34, 35) of which, which carry fastening means (36), extend approximately tangentially to the lateral surface (39) of the imaginary circular cylinder.

2. Hydraulic unit according to Claim 1, characterized in that the rubber spring elements (31, 32, 33) are, on the one hand, fastened at least indirectly to the housing (11) of the hydraulic unit (10) and are, on the other hand, connected to a holder (30) designed as a sheet-metal shaped part which is intended for fastening to the vehicle.

## Revendications

1. Organe hydraulique (10) muni d'un système amortisseur de vibrations dans une installation de freinage à régulation antipatinage d'un véhicule notamment d'un véhicule de tourisme, ayant une pompe à piston linéaire (18, 19) présentant les caractéristiques suivantes :
- l'axe longitudinal (20) du piston linéaire (16, 17) de la pompe (18, 19) de l'arbre à excentrique (15) rotatif, horizontal, passe à une distance du centre de gravité (21) de l'organe hydraulique (10),
- le boîtier (11) de l'organe hydraulique (10) est appuyé élastiquement contre le véhicule par trois éléments élastiques en caoutchouc (31, 32, 33),
- par rapport à un plan vertical (22) passant par le centre de gravité (21) et l'axe géométrique (14) de l'arbre à excentrique (15), en direction de l'axe géométrique (14), les éléments élastiques en caoutchouc (31, 32, 33) sont prévus à la fois devant et derrière une projection verticale du centre de gravité (21) et symétriquement et des deux côtés du plan vertical (22),
caractérisé par les éléments suivants :
- les trois éléments élastiques (31, 32, 33) sont prévus en dessous du centre de gravité (21) de l'organe hydraulique (10),
- les trois éléments élastiques (31, 32, 33) sont prévus le long de l'enveloppe (39) d'un cylindre circulaire théorique dont l'axe longitudinal (40) horizontal, parallèle à l'axe géométrique (14) de l'arbre à excentrique (15) passe par le centre de gravité (21) de l'organe hydraulique (10),
- les éléments élastiques (31, 32, 33) sont des ressorts en forme de rondelles dont les faces frontales (34, 35) portant les moyens de fixation (36) sont pratiquement tangentes à l'enveloppe (39) du cylindre circulaire théorique.

2. Organe hydraulique selon la revendication 1,
caractérisé en ce que
les éléments élastiques (31, 32, 33) sont fixés d'un côté au moins indirectement au boîtier (11) de l'organe hydraulique (10) et d'autre part ils sont reliés à un support (30) en forme de pièce en tôle moulée servant à la fixation au véhicule.
